# EUROPÄISCHE PATENTSCHRIFT

(11) **EP 2 036 154 B1**
(45) Veröffentlichungstag und Bekanntmachung des Hinweises auf die Patenterteilung: **17.05.2017**
(21) Anmeldenummer: 07730188.5
(22) Anmeldetag: 15.06.2007
(51) Int. Cl.: H01M 8/04089, H01M 8/04223, H01M 8/04537, H01M 8/04746, H01M 8/241, H01M 8/249

(54) **BRENNSTOFFZELLENANLAGE UND VERFAHREN ZUM BETREIBEN EINER BRENNSTOFFZELLENANLAGE**
FUEL CELL SYSTEM AND METHOD FOR OPERATING A FUEL CELL SYSTEM
INSTALLATION À PILE À COMBUSTIBLE ET PROCÉDÉ D'EXPLOITATION D'UNE INSTALLATION À PILE À COMBUSTIBLE

(30) Priorität: 03.07.2006 DE 102006030612
(43) Veröffentlichungstag der Anmeldung: 18.03.2009
(73) Patentinhaber: Siemens Aktiengesellschaft, 80333 München (DE)
(72) Erfinder: MATTEJAT, Arno, 91056 Erlangen (DE); STÜHLER, Walter, 96114 Hirschaid (DE)
(86) Internationale Anmeldenummer: PCT/EP2007/055947
(87) Internationale Veröffentlichungsnummer: WO 2008/003576

(56) Entgegenhaltungen:
- WO-A-2006/003158
- DE-A1- 2 146 933
- DE-A1- 3 732 234
- US-A- 3 256 116
- US-A- 3 580 741
- US-A1- 2003 022 037
- VOSS H ET AL: "Portable fuel cell power generator" JOURNAL OF POWER SOURCES, ELSEVIER, AMSTERDAM, NL, Bd. 65, Nr. 1, März 1997 (1997-03), Seiten 155-158, XP004059644 ISSN: 0378-7753

## Beschreibung

Die Erfindung betrifft eine Brennstoffzellenanlage gemäß Oberbegriff des Patentanspruchs 1 und ein Verfahren zum Betreiben einer Brennstoffzellenanlage gemäß Oberbegriff des Patentanspruchs 4; eine derartige Brennstoffzellenanlage bzw. ein derartiges Verfahren sind z.B. aus der WO 2006/003158 A1 bekannt.

Beim Betrieb einer Brennstoffzellenanlage wird üblicherweise einem aus gestapelten Brennstoffzellen gebildeten Brennstoffzellenblock zur Erzeugung elektrischen Stroms anodenseitig ein Brenngas, beispielsweise Wasserstoff, und kathodenseitig Luft oder Sauerstoff als weiteres Reaktionsgas zugeführt. Es gibt mittlerweile eine Vielzahl von unterschiedlichen Arten von Brennstoffzellenanlagen, die sich im Hinblick auf ihren Aufbau und insbesondere im Hinblick auf die verwendeten Elektrolyte sowie im Hinblick auf die notwendige Betriebstemperatur unterscheiden. Bei einer sogenannten PEM-Brennstoffzelle (proton exchange membrane) ist zwischen einer gasdurchlässigen Anode und einer gasdurchlässigen Kathode eine Polymermembran angeordnet, die für Wasserstoffprotonen durchlässig ist. Da eine einzige Brennstoffzelle eine Spannung von lediglich etwa 0,7 bis 0,9 Volt liefert, sind mehrere Brennstoffzellen elektrisch in Serie zu einem Stapel miteinander verbunden. Die einzelnen Brennstoffzellen sind hierbei üblicherweise durch eine bipolare Platte voneinander getrennt. Die bipolare Platte weist hierbei in der Regel eine Art Rillen- oder Noppenstruktur auf und liegt an der Anode bzw. an der Kathode an. Durch die Rillen- oder Noppenstruktur ist ein Gasraum zwischen der bipolaren Platte und der Anode bzw. Kathode gebildet, durch den die Reaktionsgase strömen.

Beim Betrieb einer PEM-Brennstoffzelle wandern Wasserstoffprotonen durch den Elektrolyten auf die Sauerstoffseite und reagieren mit dem Sauerstoff. Dabei fällt als Reaktionsprodukt Reaktionswasser an. Durch die üblicherweise vorgenommene Befeuchtung der Reaktionsgase vor ihrem Eintritt in die Brennstoffzelle wird zusätzlich Wasser in die Gasräume eingebracht. Neben dem Wasser fallen zudem - je nach dem Reinheitsgrad der verwendeten Reaktionsgase - Inertgase an. Bei einer Brennstoffzellenanlage mit mehreren kaskadenartig in Reihe nacheinander angeordneten Brennstoffzellenstapeln sammeln sich das Wasser sowie die Inertgase im letzten Stapel oder der letzten Brennstoffzelle an. Dort sind die Reaktionsgase daher mit Inertgas angereichert. Aufgrund dieser "Reaktantenverdünnung" kommt es zu einem Spannungsabfall der letzten Brennstoffzelle bzw. des letzten Brennstoffzellenstapels.

Dieser Brennstoffzellenstapel wird daher in gewissen Zeitabständen gespült, d.h. über ein Spülventil wird eine gasausgangsseitig an den Stapel angeschlossene Spülleitung geöffnet, so dass das angesammelte Wasser und die Inertgase ausgetragen werden. Die letzte Brennstoffzelle oder der letzte Brennstoffzellenstapel werden daher auch als Spülzelle bzw. als Spülzellenstapel bezeichnet. Der Spannungsabfall wird üblicherweise als Steuer- oder Regelsignal für das Öffnen des Spülventils herangezogen. Durch das Spülen wird die Konzentration der Inertgase abgereichert, so dass das Spannungsniveau wieder angehoben wird.

Bei einer Anreicherung mit Inertgasen werden die Spülzellen nur noch unzureichend mit den Reaktionsgasen bei gleichzeitig fließendem Strom versorgt. Es liegen daher die Randbedingungen für eine Wasser-Elektrolyse vor und es kommt auf der Anodenseite zu der Teilreaktion 40H⁻>O₂+2H₂O+2e⁻. Es wird also Sauerstoff gebildet, der an den Spülzellen zu Korrosion führen kann. Dieses Problem besteht insbesondere dann, wenn die Spannung in den Spülzellen bis in den Bereich des Korrosionspotenzials des verwendeten Materials absinkt.

Aus der WO 2006/003158 A1 ist es bekannt, diese Korrosionsgefahr dadurch zu vermeiden, dass der Spannungsabgriff zur Messung der Spannung in der Spülzelle im Bereich eines Gasaustritts zum Spülventil vorgesehen ist. Unter "im Bereich des Gasaustritts" wird hierbei die Anordnung des Spannungsabgriffs in etwa auf der Höhe des Gasaustritts verstanden. Der Spannungsabgriff ist dabei an einer unteren Randseite einer Bipolarplatte vorgesehen und der Gasaustritt befindet sich ebenfalls an der unteren Randseite der Bipolarplatte.

Der Erfindung liegt die Aufgabe zugrunde, einen noch sicheren Betrieb einer Brennstoffzellenanlage mit noch geringerer Korrosionsgefahr zu ermöglichen.

Die Aufgabe wird gemäß der Erfindung gelöst durch eine Brennstoffzellenanlage mit den Merkmalen des Patentanspruchs 1.

Die Erfindung geht hierbei von der Überlegung aus, dass derjenige Bereich der Brennstoffzelle der größten Korrosionsgefahr ausgesetzt ist, in dem sich am schnellsten unzulässig niedrige Reaktionsgaskonzentrationen einstellen. Wie sich herausgestellt hat, muss sich dieser Bereich nicht notwendigerweise im Bereich des Gasaustrittes befinden, sondern er kann sich, abhängig von der Gestaltung des Gasraumes, auch an anderen Stellen des Gasraumes befinden. So kann er sich bei einem Gasraum mit weitgehend homogenem Strömungswiderstand, wie er bei Noppenstrukturen vorliegt, dort befinden, wo Reaktionsgase einen langen Strömungsweg zurückgelegt haben, ohne sich mit anderen Gasströmen zu mischen. Der Bereich findet sich insbesondere in "toten Ecken" des Gasraumes, in denen sich im Vergleich zum dem Gasaustrittsbereich deutlich geringere Gasströmungen einstellen.

Der genaue Bereich, an dem die Konzentration des Reaktionsgases am schnellsten auf einen vorgegebenen Grenzwert abfällt, kann hierbei rechnerisch oder auch experimentell ermittelt werden.

Durch einen Spannungsabgriff in dem Bereich, an dem die Konzentration des Reaktionsgases am schnellsten auf einen vorgegebenen Grenzwert abfällt, kann sichergestellt werden, dass an keiner Stelle des Gasraumes das Korrosionspotenzial unterschritten wird, wodurch die Korrosionsgefahr deutlich reduziert werden kann. Weiterhin hat sich herausgestellt, dass durch einen derartigen Spannungsabgriff eine besonders genaue und sensible Steuerung oder Regelung für die Betätigung des Spülventils möglich ist, wodurch sich insgesamt steuerungs- oder regelungstechnische Verbesserungen ergeben. Im Vergleich zu einem Spannungsabgriff im Bereich des Gasaustrittes kommt es hierdurch natürlich zu vermehrten Spülvorgängen, d.h. die Spülrate wird erhöht.

Erfindungsgemäß ist zwischen zwei Brennstoffzellen eine Bipolarplatte angeordnet und der Spannungsabgriff ist im Bereich einer Randseite der Bipolarplatte vorgesehen, wobei sich ein Gasaustritt für das Reaktionsgas an einer unteren Randseite der Bipolarplatte befindet und der Spannungsabgriff an einer linken oder rechten Randseite der Bipolarplatte vorgesehen ist.

Für eine möglichst effiziente Ausnutzung der Reaktionsgase weist die Brennstoffzellenanlage mehrere kaskadenartig angeordnete Brennstoffzellenstapel auf. Hierunter wird eine Abfolge von Brennstoffzellenstapel verstanden, die in Serie von den Reaktionsgasen durchströmt werden, wobei in Strömungsrichtung der Reaktionsgase die Anzahl der Brennstoffzellen der einzelnen aufeinander folgenden Stapel sukzessive abnimmt. Die Abnahme der Anzahl der Brennstoffzellen ist hierbei auf die jeweilige Restgasmenge abgestimmt, welche aus dem vorhergehenden Brennstoffzellenstapel austritt. Der letzte Brennstoffzellenstapel ist als Spülzellenstapel mit einer oder mehreren Spülzellen ausgebildet, an den sich das Spülventil anschließt.

Die Erfindung ist gleichermaßen auch auf eine Brennstoffzellenanlage mit einem einzigen parallel von den Reaktionsgasen durchströmten Brennstoffzellenblock anwendbar.

Vorzugsweise ist die Brennstoffzellenanlage mit PEM-Brennstoffzellen ausgebildet.

Die Aufgabe wird erfindungsgemäß weiterhin gelöst durch ein Verfahren mit den Merkmalen des Patentanspruchs 4. Die im Hinblick auf die Brennstoffzellenanlage angeführten Vorteile und bevorzugten Ausgestaltungen sind sinngemäß auch auf das Verfahren übertragbar.

Ausführungsbeispiele der Erfindung werden im Folgenden anhand der Zeichnung näher erläutert. Es zeigen jeweils in schematischen und stark vereinfachten Darstellungen:
- FIG 1: einen Aufbau einer Brennstoffzellenanlage mit kaskadenartig angeordneten Brennstoffzellenstapeln,
- FIG 2: einen Spannungsabgriff bei einer ersten Bipolarplatte und
- FIG 3: einen Spannungsabgriff bei einer zweiten Bipolarplatte.

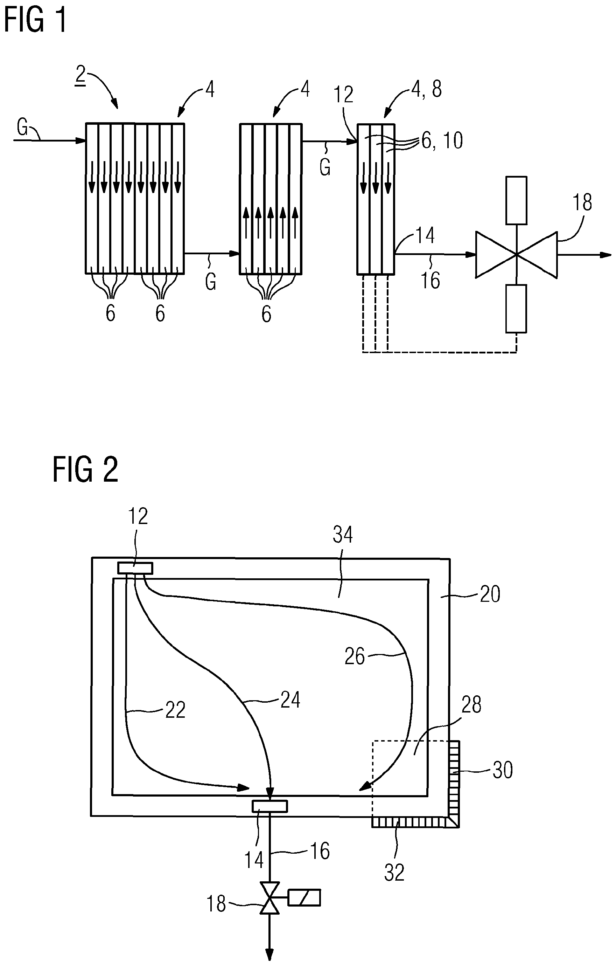

Gemäß FIG 1 umfasst eine Brennstoffzellenanlage 2 mehrere kaskadenartig zueinander angeordnete Brennstoffzellenstapel 4, die wiederum jeweils aus mehreren Brennstoffzellen 6 bestehen. Die einzelnen Brennstoffzellenstapel 4 sind hierbei gasseitig in Serie zueinander angeordnet. Dem gasseitig ersten Brennstoffzellenstapel wird ein Reaktionsgas G in einem oberen Bereich zugeführt und durchströmt die einzelnen Brennstoffzellen 6 parallel in Richtung der Pfeile nach unten. Dort verlässt das Reaktionsgas G den ersten Brennstoffzellenstapel 4 und wird in den nächsten Brennstoffzellenstapel 4 geleitet.

Der letzte Brennstoffzellenstapel ist als Spülzellenstapel 8 mit mehreren Spülzellen 10 ausgebildet. Dem Spülzellenstapel 8 wird das Reaktionsgas G im Bereich eines Gaseintritts 12 zugeführt und durchströmt die einzelnen Spülzellen 10 nach unten in Richtung zu einem Gasaustritt 14. An den Gasaustritt 14 schließt sich eine Spülleitung 16 an, die über ein regelbares Spülventil 18 verschließbar ist.

Die einzelnen Spülzellen 10 sind jeweils voneinander durch eine in FIG 2 schematisch dargestellte Bipolarplatte 20 voneinander getrennt, die jeweils den oberen Gaseintritt 12 und den unteren Gasaustritt 14 aufweisen. Die Begriffe "unten" und "oben" beziehen sich hier auf die Strömungsrichtung des Reaktionsgases G. Die Richtung des im Betrieb fließenden elektrischen Stroms ist senkrecht zu der Bipolarplatte 20 bzw. zur Zeichenfläche orientiert.

Beim Betrieb der Brennstoffzellenanlage ist das Spülventil 18 zunächst geschlossen, so dass sich in den Spülzellen 10 das bei der Reaktion entstehende Reaktionswasser sowie Inertgase anreichern, die in den Reaktionsgasen vorhanden sind. Durch die Anreicherung der Inertgase fällt die Spülzellenspannung ab. Diese wird gemessen und zur Steuerung oder Regelung eines Spülvorgangs herangezogen, also zur Steuerung oder Regelung des Spülventils 18. Unterschreitet die Spannung einen vorgegebenen Regelwert, öffnet das Spülventil 18 und das Reaktionswasser sowie das in den Spülzellen 10 befindliche Restgas, insbesondere die Inertgase werden ausgetragen.

Zweckdienlicherweise werden hierbei sowohl die Sauerstoff- oder Kathodenseite als auch die Wasserstoff- oder Anodenseite der Spülzellen 10 vorzugsweise jeweils über ein eigenes Spülventil 18, insbesondere gleichzeitig gespült.

Aufgrund der Anreicherung mit Inertgasen werden die Spülzellen nur noch unzureichend mit den Reaktionsgasen bei gleichzeitig fließendem Strom versorgt. Es liegen daher die Randbedingungen für eine Wasser-Elektrolyse vor und es kommt auf der Anodenseite zu der Teilreaktion 40H⁻>O₂+2H₂O+2e⁻. Es wird also Sauerstoff gebildet, der bei der üblicherweise metallischen Bipolarplatte 20 zu Korrosion führen kann. Dieses Problem besteht insbesondere dann, wenn die Spannung in den Spülzellen 10 bis in den Bereich des Korrosionspotenzials des für die Bipolarplatten 20 verwendeten Materials absinkt.

Bei der in FIG 2 gezeigten Bipolarplatte wird durch eine nicht näher dargestellte Noppen- oder Rillenstruktur sichergestellt, dass die Gasführung vom Gaseintritt zu dem Gasaustritt über die gesamte Fläche des Gasraumes erfolgt, d.h. die Reaktionsgase verteilen sich im Bereich des Gaseintritts 12 über die gesamte Fläche des Gasraumes 34 und werden im Bereich des Gasaustritts 14 wieder zusammengeführt. Hierdurch ergeben sich jedoch verschieden lange Gaswege 22, 24, 26 im Gasraum 34. Reaktionsgase, die entlang des Gasweges 26 strömen, haben hierbei den längsten Weg von Gaseintritt 12 zu Gasaustritt 14 zurückzulegen. Im rechten unteren Eckbereich 28 des Gasraumes 34 werden sich deshalb die vergleichsweisegeringsten Gasbewegungen des gesamten Gasraumes 34 einstellen, da dort zum einen durch die geometrische Gestaltung des Gasraumes 34 die Gasströmung behindert ist, zum anderen aber die Reaktionsgase auch den längsten Weg ohne weitere Vermischung mit anderen Reaktionsgasen hinter sich haben. Hierdurch fällt in dem Eckbereich 28 die Reaktionsgaskonzentration am schnellsten auf einen vorgegebenen Grenzwert ab.

Im Vergleich hierzu hat im Bereich des Gasaustritts 14 das über den Gasweg 26 geführte Gas zwar einen noch längeren Weg zurückgelegt, aber es ist dort bereits wieder mit Gas gemischt, das über den Gasweg 24 geführt wurde und deshalb eine höhere Reaktionsgaskonzentration aufweist. Im Bereich des Gasaustritts 14 fällt deshalb die Reaktionsgaskonzentration langsamer auf den vorgegebenen Grenzwert ab als im Eckbereich 28.

Der Spannungsabgriff für die Steuerung oder Regelung der Spülung ist deshalb an der bipolaren Platte 20 im Eckbereich 28 des Gasraumes im Bereich an der rechten seitlichen Randseite 30 der bipolaren Platte 20 vorgesehen.

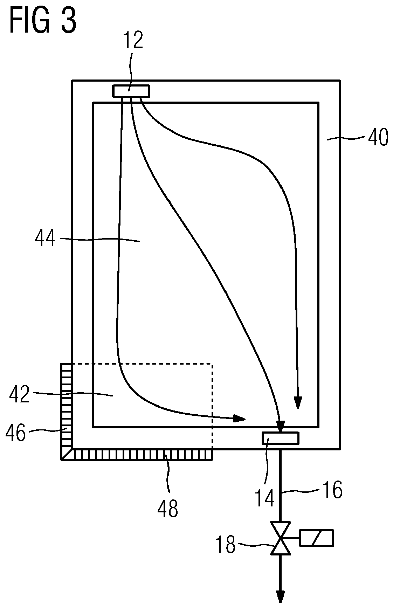

FIG 3 zeigt eine Bipolarplatte 40 einer rechteckigen Brennstoffzelle mit einer Diagonalgasführung. Hier befindet sich der Bereich, an dem die Reaktionsgaskonzentration am schnellsten auf einen vorgegebenen Grenzwert abfällt, im linken unteren Eckbereich 42 des Gasraumes 44, da sich dort die geringsten Gasbewegungen einstellen. Der Spannungsabgriff für die Regelung der Spülung ist deshalb im linken unteren Eckbereich 42 der Bipolarplatte 40 im Bereich an der linken Randseite 46 der bipolaren Platte 40 vorgesehen.

Grundsätzlich kann der Bereich oder können die Bereiche, an denen die Reaktionsgaskonzentration(en) am schnellsten auf einen vorgegebenen Grenzwert abfällt (abfallen), rechnerisch oder experimentell ermittelt werden. Der Grenzwert wird bevorzugt derart gewählt, dass er oberhalb des Korrosionspotenzials der Bipolarplatte 20, 40 liegt.

Werden mehrere Spülzellen parallel mit Reaktionsgas versorgt, so kann die Steuerung oder Regelung ebenfalls auf der schnellsten Abnahme der Zellspannung als Folge der schnellsten Abnahmen der Reaktionsgaskonzentrationen beruhen. Die Regelung ist in diesem Fall nur so aufzubauen, dass die Zelle mit der schnellsten Abnahme die Spülung auslöst.

## Patentansprüche

1. Brennstoffzellenanlage (2) mit zumindest einem Brennstoffzellenstapel (4), dem gaseingangsseitig ein Reaktionsgas (G) zuführbar ist und der gasausgangseitig an einer Spülzelle (10) zumindest ein Spülventil (18) aufweist, und mit einer Steuerung, die die Betätigung des Spülventils (18) in Abhängigkeit der Spannung der Spülzelle (10) steuert,
**dadurch gekennzeichnet, dass** ein Spannungsabgriff in einem Bereich (28, 42) der Spülzelle vorgesehen ist, an dem die Konzentration des Reaktionsgases (G) am schnellsten auf einen vorgegebenen Grenzwert abfällt, wobei zwischen zwei Brennstoffzellen (6, 10) eine Bipolarplatte (20, 40) angeordnet ist und der Spannungsabgriff im Bereich einer Randseite (30, 46) der Bipolarplatte (20, 40) vorgesehen ist, wobei sich ein Gasaustritt (14) für das Reaktionsgas an einer unteren Randseite der Bipolarplatte (20, 40) befindet und der Spannungsabgriff an einer linken oder rechten Randseite der Bipolarplatte (20, 40) vorgesehen ist.

2. Brennstoffzellenanlage (2) nach Anspruch 1, bei der mehrere kaskadenartig angeordnete Brennstoffzellenstapel (4) vorgesehen sind.

3. Brennstoffzellenanlage (2) nach einem der vorhergehenden Ansprüche, bei der PEM-Brennstoffzellen (6, 10) verwendet werden.

4. Verfahren zum Betreiben einer Brennstoffzellenanlage (2), die zumindest einen Brennstoffzellenstapel (4) aufweist, dem gaseingangsseitig ein Reaktionsgas (G) zugeführt wird und der gasausgangsseitig eine Spülzelle (10) mit einem zugeordneten Spülventil (18) aufweist, wobei die Spannung der Spülzelle (10) gemessen und in Abhängigkeit der gemessenen Spannung die Betätigung des Spülventils (18) gesteuert wird,
**dadurch gekennzeichnet, dass** die Spannung in einem Bereich (28, 42) der Spülzelle (10) gemessen wird, an dem die Konzentration des Reaktionsgases am schnellsten auf einen vorgegebenen Grenzwert abfällt, wobei zwischen zwei Brennstoffzellen (6, 10) eine Bipolarplatte (20, 40) angeordnet ist und ein Spannungsabgriff zur Messung der Spannung im Bereich einer Randseite (30, 46) der Bipolarplatte (20, 40) vorgesehen ist, wobei sich ein Gasaustritt (14) für das Reaktionsgas an einer unteren Randseite der Bipolarplatte (20, 40) befindet und der Spannungsabgriff an einer linken oder rechten Randseite der Bipolarplatte (20, 40) vorgesehen ist.

5. Verfahren nach Anspruch 4, bei dem mehrere kaskadenartig angeordnete Brennstoffzellenstapel (4) vorgesehen sind, die von dem Reaktionsgas (G) seriell durchströmt werden.

## Claims

1. Fuel cell system (2) with at least one fuel cell stack (4), to which a reaction gas (G) can be supplied on the gas inlet side and which has at least one flush valve (18) on the gas outlet side on a flush cell (10), and with a control, which controls the actuation of the flush valve (18) as a function of the voltage of the flush cell (10), **characterised in that** a voltage tap is provided in a region (28, 42) of the flush cell in which the concentration of the reaction gas (G) falls most quickly to a predefined threshold value, wherein a bipolar plate (20, 40) is arranged between two fuel cells (6, 10) and the voltage tap is provided in the region of an edge side (30, 46) of the bipolar plate (20, 40), wherein a gas outlet (14) for the reaction gas is disposed on a lower edge side of the bipolar plate (20, 40) and the voltage tap is provided on a left or right edge side of the bipolar plate (20, 40).

2. Fuel cell system (2) according to claim 1, in which provision is made for several fuel cell stacks (4) which are arranged in a cascade-like manner.

3. Fuel cell system (2) according to one of the preceding claims, in which the PEM fuel cells (6, 10) are used.

4. Method for operating a fuel cell system (2), which has at least one fuel cell stack (4), to which a reaction gas (G) is supplied on the gas inlet side and which has a flush cell (10) with an assigned flush valve (18) on the gas outlet side, with the voltage of the flush cell (10) being measured and the actuation of the flush valve (18) being controlled as a function of the measured voltage, **characterised in that** the voltage is measured in a region (28, 42) of the flush cell (10), in which the concentration of the reaction gas falls most quickly to a predetermined threshold value, wherein a bipolar plate (20, 40) is arranged between two fuel cells (6, 10) and a voltage tap for measuring the voltage is provided in the region of an edge side (30, 46) of the bipolar plate (20, 40), wherein a gas outlet (14) for the reaction gas is disposed on a lower edge side of the bipolar plate (20, 40) and the voltage tap is provided on a left or right edge side of the bipolar plate (20, 40).

5. Method according to claim 4, in which several fuel cell stacks (4) which are arranged in a cascade-like manner are provided, which are passed through in series by the reaction gas (G).

## Revendications

1. Installation ( 2 ) à pile à combustible, comprenant au moins un empilement ( 4 ) de piles à combustible auquel un gaz ( G ) de réaction peut être apporté du côté de l'entrée du gaz et qui a, du côté de la sortie du gaz, sur une pile ( 10 ) de lavage, au moins une vanne ( 18 ) de lavage et comprenant une commande, qui commande l'actionnement de la vanne ( 18 ) de lavage en fonction de la tension de la pile ( 10 ) de lavage, **caractérisée en ce qu'**il est prévue une prise de tension dans une partie ( 28, 42 ) de la pile de lavage où la concentration d'un gaz ( G ) de réaction s'abaisse le plus vite à une valeur limite donnée à l'avance, une plaque ( 20, 40 ) bipolaire étant montée entre deux piles ( 6, 10 ) à combustible et la prise de tension étant prévue dans la région d'un côté ( 30, 46 ) de bord de la plaque ( 20, 40 ) bipolaire, une sortie ( 14 ) du gaz de réaction se trouvant sur un côté de bord inférieur de la plaque ( 20, 40 ) bipolaire et la prise de tension étant prévue sur un côté de bord gauche ou droit de la plaque ( 20, 40 ) bipolaire.

2. Installation ( 2 ) à pile à combustible suivant la revendication 1, dans laquelle il est prévu plusieurs empilements ( 4 ) de piles à combustible montés en cascade.

3. Installation ( 2 ) à pile à combustible suivant l'une des revendications précédentes, dans laquelle des piles ( 6, 10 ) à combustible PEM sont utilisées.

4. Procédé pour faire fonctionner une installation ( 2 ) à pile à combustible, qui a au moins un empilement ( 4 ) de piles à combustible, auquel est apporté, du côté de l'entrée du gaz, un gaz ( G ) de réaction et qui a, du côté de la sortie du gaz, une cellule ( 10 ) de lavage ayant une vanne ( 18 ) de lavage associée, la tension de la cellule ( 10 ) de lavage étant mesurée et, en fonction de la tension mesurée, l'actionnement de la vanne ( 18 ) de lavage étant commandée, **caractérisé en ce que** l'on mesure la tension dans une région ( 28, 42 ) de la pile ( 10 ) de lavage où la concentration du gaz de réaction diminue le plus vite jusqu'à une valeur limite donnée à l'avance, une plaque ( 20, 40 ) bipolaire étant montée entre deux piles ( 6, 10 ) à combustible et une prise de tension étant prévue pour mesurer la tension dans la région d'un côté ( 30, 46 ) de bord de la plaque ( 20, 40 ) bipolaire, une sortie ( 14 ) du gaz de réaction se trouvant sur un côté de bord inférieur de la plaque ( 20, 40 ) bipolaire et la prise de tension étant prévue sur un côté de bord gauche ou droit de la plaque ( 20, 40 ) bipolaire.

5. Procédé suivant la revendication 4, dans lequel il est prévu plusieurs empilements ( 4 ) de piles à combustible en cascade, parcourus en série par le gaz ( G ) de réaction.
